# EUROPEAN PATENT APPLICATION

(11) **EP 4 699 907 A1**
(43) Date of publication of application: **25.02.2026**
(21) Application number: 25188987.9
(22) Date of filing: 11.07.2025
(51) Int. Cl.: B62D 25/08, B60L 53/16

(54) **FRONT STRUCTURE OF ELECTRIC VEHICLE**

(30) Priority: 23.08.2024 JP 2024143278
(71) Applicant: Suzuki Motor Corporation, Shizuoka 432-8611 (JP)
(72) Inventor: ARAI, Hayato, HAMAMATSU-SHI, 432-8611 (JP); USUDA, Yoshitaka, HAMAMATSU-SHI, 432-8611 (JP)
(74) Representative: Plasseraud IP

(57) **Abstract**

[Problem to be Solved] To ensure the rigidity of a charging unit in a vehicle front part and to enable a charging operation to be effectively performed.

[Solution] A front structure of an electric vehicle includes a dash side member 20, an upper bumper cross member 50 extending in a width direction to connect front portions of the dash side member 20 on opposite sides, and a connector receiver 30 including a charging unit 31 to which a charging connector of a charging device external to the vehicle is connected and which faces forward, and the charging unit 31 is disposed along a front surface of the upper bumper cross member 50.

## Description

### [Technical Field]

The present invention relates to front structures of electric vehicles.

### [Background Art]

In an electric vehicle, for example, as disclosed in Patent Literature 1, a structure is known in which a charging unit including a charging port is provided in a vehicle front part. In a charging operation of such an electric vehicle, for example, an operator connects a charging connector of a charging device external to the vehicle from the front of the vehicle to the charging port in the vehicle front part and charges a battery.

During the charging operation, a predetermined load acts on the charging port and a peripheral structure. Therefore, the charging port and the peripheral structure need to have a predetermined strength and rigidity. In addition, the front part of the vehicle requires a structure that ensures rigidity against an impact load and absorbs the impact load if the impact load of a front collision or the like acts thereat.

For example, in the structure disclosed in Patent Literature 1, a connector receiver is configured to be movable in a vehicle front-rear direction in a front compartment by a movable arm. That is, in the structure, the position of the connector receiver in the vehicle front-rear direction is made to differ between that during charging operation and that at other times, such as when the vehicle is traveling.

In such a configuration, during charging, that is, when the vehicle is stopped, by supporting the charging port and the like with the movable arm extending in the vehicle front-rear direction, the charging port and the like are configured to withstand loads acting during an operation, for example, loads acting when a charging connector is connected to, or disconnected from, the charging port. Furthermore, when an impact load of a front collision or the like acts on the vehicle front part while the vehicle is traveling, the connector receiver is located rearward as compared with during charging time, so that a stroke is secured to reduce impact energy, absorbing impact.

### [Citation List]

### [Patent Literature]

[Patent Literature 1] JP 2021-142942 A

### [Summary of Invention]

### [Problems to be Solved by the Invention]

In the structure of the above example, however, space is required for the connector receiver to move in the vehicle front-rear direction. Therefore, to adopt the structure of the above example, it is assumed that an electric vehicle includes a front compartment having a predetermined breadth. Depending on the specifications of the electric vehicle, however, the front compartment may be narrow. In this case, in the front compartment, for example, a proportion occupied by an electric motor may increase, and it may be difficult to secure space for arranging other members.

Additionally, in a vehicle including a so-called cabover structure in which front seats (driver seat and front passenger seat) are arranged above the electric motor, a power device such as the electric motor is not disposed inside the front compartment, and the front compartment therefore often has a small volume. It is therefore difficult to dispose a movable arm as in the above example.

**In** the vehicle in which the front compartment has such a small volume, it may be difficult to secure a space for disposing the movable arm in the front compartment as in the structure of the above example. Therefore, in the structure of the above example, there has been room for improvement in ensuring the rigidity of a charging unit and a peripheral structure arranged in a limited space in the front compartment and trying to effectively perform the charging operation.

The present invention has been made to solve the above problems, and an object thereof is to ensure the rigidity of a charging unit and a peripheral structure arranged in a vehicle front part and to provide a front structure of an electric vehicle in which a charging operation can be effectively performed.

### [Means for Solving the Problems]

A front structure of an electric vehicle according to the present invention to achieve the above object includes a vehicle body frame arranged on opposite sides, in a vehicle width direction, of a front compartment disposed in a vehicle front part, and extending in a vehicle front-rear direction; a bumper cross member extending in the vehicle width direction to connect front portions of the vehicle body frame on the opposite sides in the vehicle width direction; and a connector receiver including a charging unit to which a charging connector of a charging device external to the vehicle is connected and which faces forward of the vehicle. In the front structure of the electric vehicle, the charging unit is disposed along a front surface of the bumper cross member.

### [Advantageous Effects of Invention]

According to the present invention, it is possible to secure the rigidity of a charging unit and a peripheral structure arranged in a front part of an electric vehicle and to effectively perform a charging operation.

### [Brief Description of Drawings]

[Figure 1] Figure 1 is a perspective view of a front structure of an electric vehicle according to the present invention as viewed from the front of the vehicle.
[Figure 2] Figure 2 is a front view of a charging unit and a peripheral structure of Figure 1.
[Figure 3] Figure 3 is a plan view of the front structure of Figure 1.
[Figure 4] Figure 4 is a side view of the front structure of Figure 1.
[Figure 5] Figure 5 is an enlarged perspective view showing the charging unit and the peripheral structure of Figure 1 in an enlarged manner.

### [Mode for Carrying Out the Invention]

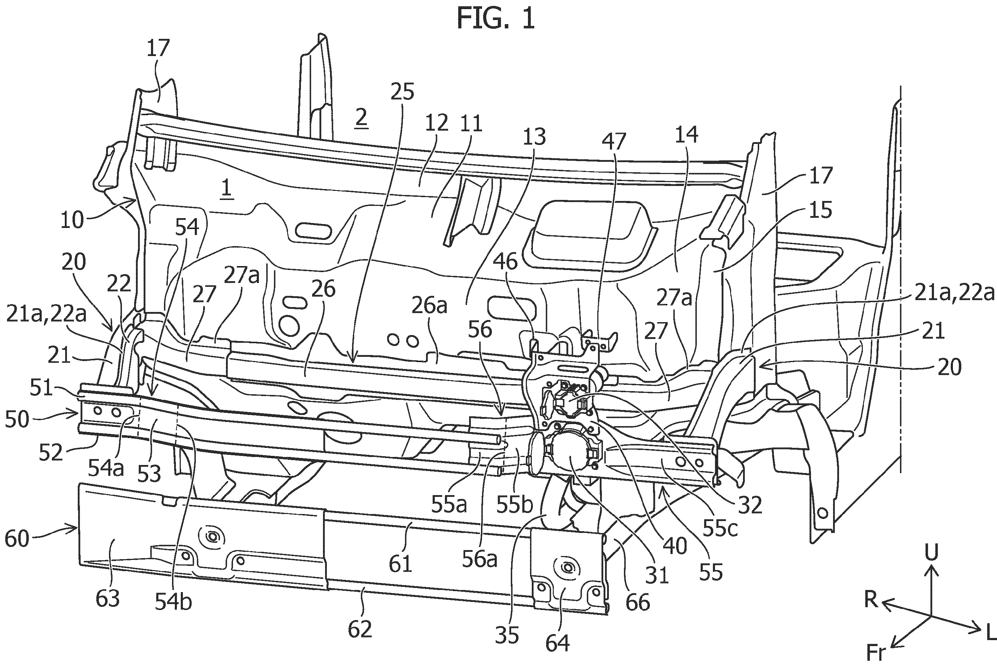

Hereinafter, one embodiment of a side structure of an electric vehicle according to the present invention will be described with reference to the drawings (Figures 1 to 5). In the drawings, an arrow Fr direction indicates forward in a vehicle front-rear direction. In the description of the embodiment, "front part (front end) and rear part (rear end)" correspond to a front part and a rear part in the vehicle front-rear direction. Arrows R and L indicate a right side and a left side when an occupant looks ahead of the vehicle. Furthermore, an arrow U indicates upward in a vehicle up-down direction.

As shown in Figure 1, a front structure of the electric vehicle of the present embodiment includes a dash panel 10, a vehicle body frame, bumper cross members 50 and 60, a connector receiver 30, and a bracket 40. Furthermore, the front structure includes a dash side panel 17 and a dash cross member 25. The front structure is a structure inside a front compartment 1 disposed in the vehicle front part.

Furthermore, in the electric vehicle of the present embodiment, a battery pack (not shown) is disposed below a floor panel 3 disposed behind the dash panel 10 in the vehicle, and an electric motor is disposed behind the battery pack in the vehicle. That is, the electric vehicle of the present embodiment is of a so-called rear-wheel drive type in which rear wheels are driven by the electric motor in the rear part of the vehicle. Therefore, the electric vehicle is a vehicle with specifications including the front compartment 1 having a small volume. Hereinafter, members constituting the front structure of the present embodiment will be described.

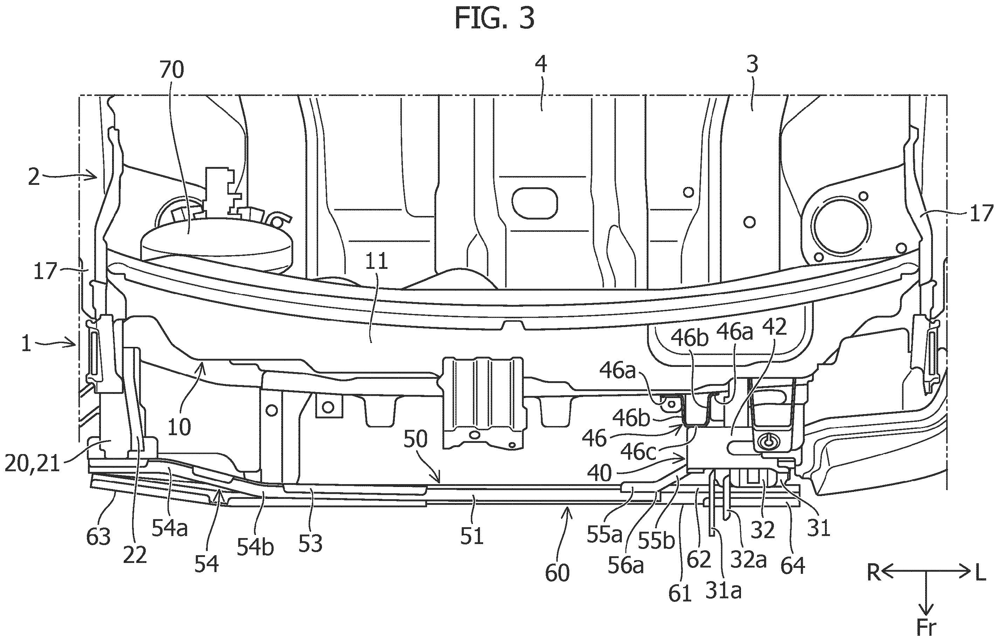

As shown in Figure 3, the dash panel 10 is disposed in the rear part of the front compartment 1. Moreover, the dash panel 10 is a panel that separates a passenger compartment 2 including a luggage compartment and the front compartment 1 and is formed of a metal material. Furthermore, as shown in Figure 1, the dash panel 10 includes an upper surface part 11, a rear wall part 12, a front wall part 13, an outer wall part 14, and an outer vertical wall part 15. In addition, the passenger compartment 2 of this example includes, but is not limited to, the luggage compartment. The luggage compartment may be provided separately from the passenger compartment 2.

The upper surface part 11 is a part inclining downward in the vehicle as it is more forward in the vehicle and extending in a vehicle width direction. The upper surface part 11 of this example is not a flat surface and has a predetermined uneven shape. The rear wall part 12 is a wall part extending upward from a rear end of the upper surface part 11 in the vehicle and extending in the vehicle width direction.

At an upper end of the rear wall part 12, an attaching portion or the like to which a lower end of a front windshield is attached may be provided. Furthermore, the dash side panel 17 is joined to an outer portion of the rear wall part 12 in the vehicle width direction.

The front wall part 13 has a front surface extending downward from a front end of the upper surface part 11, and an inclined surface inclined rearward in the vehicle as it is more downward in the vehicle from a lower end of the front surface in the vehicle. The front surface and the inclined surface extend in the vehicle width direction. The outer wall part 14 extends downward in the vehicle from an outer portion of the upper surface part 11 in the vehicle width direction and extends inclining inward in the vehicle width direction as it is more forward in the vehicle. A front portion of the outer wall part 14 is curved inward and connected to outer portions of the front and inclined surfaces of the front wall part 13 in the vehicle width direction.

The outer vertical wall part 15 is a part protruding outward in the vehicle width direction from a rear end of the outer wall part 14 and extending in the vehicle up-down direction. Although detailed illustration is omitted, the outer vertical wall part 15 has an inclined surface that inclines slightly forward in the vehicle as it is more downward in the vehicle, and a vertical surface that extends downward from a lower end of the inclined surface. A rear end of an outer portion of the dash cross member 25 in the vehicle width direction is joined to a lower portion of the outer vertical wall part 15. Furthermore, the dash side panel 17 is joined to an outer portion of the outer vertical wall part 15 in the vehicle width direction.

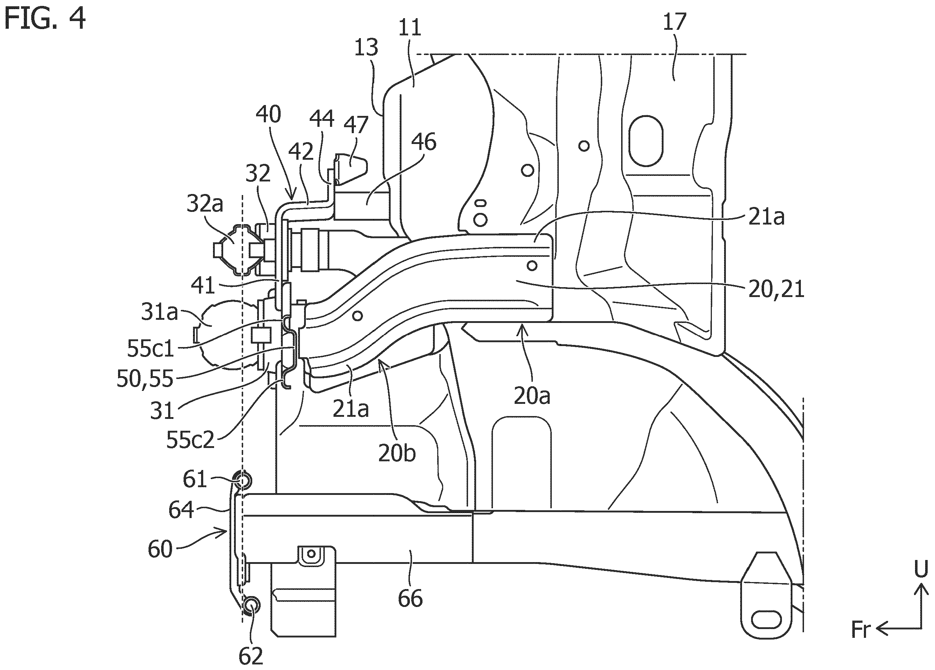

As shown in Figures 1 and 4, the dash side panel 17 is a metal panel disposed on an outer side in the vehicle width direction. In this example, the dash side panel 17 extends rearward from an outer portion of the dash panel 10 in the vehicle width direction in the vehicle and extends in the vertical up-down direction. A dash side member 20 is joined to an outer portion of a lower part of the dash side panel 17 in the vehicle width direction. In addition, a rear end of the dash side panel 17 may be placed at a front portion of a door opening of a side door.

The vehicle body frame of the present embodiment is arranged on opposite sides of the vehicle front part in the vehicle width direction and extends in the vehicle front-rear direction. In general, the vehicle body frame is a member constituting a vehicle body and is a highly rigid member formed of a metal material. The vehicle body frame of the present embodiment is the dash side member 20 extending forward in the vehicle from a front part of the dash side panel 17. Hereinafter, the structure of the dash side member 20 will be described.

As shown in Figures 1, 3, and 5, the dash side member 20 includes an outer member 21 and an inner member 22. The outer member 21 has a U-shaped cross-sectional shape that opens inward in the vehicle width direction. Furthermore, a flange 21a is provided on upper and lower portions of the outer member 21. Although not shown in detail, the inner member 22 may have a U-shaped cross-section that opens outward in the vehicle width direction.

Furthermore, a flange 22a is provided on upper and lower portions of the inner member 22 and is joined to the flange 21a of the outer member 21 by spotwelding. By joining the outer member 21 and the inner member 22, a closed cross-sectional structure is formed in a transverse cross section of the dash side member 20. Thus, the rigidity of the dash side member 20 is ensured.

Each of the outer member 21 and the inner member 22 has a straight portion 20a and an inclined portion 20b. As shown in Figure 4, the straight portion 20a of the outer member 21 extends forward from a front portion of the lower part of the dash side panel 17 in the vehicle. The inclined portion 20b of the outer member 21 inclines and extends downward in the vehicle as it is more forward from a front portion of the straight portion 20a in the vehicle. The inclined portion 20b of this example extends while curving downward as it is more forward from the front portion of the straight portion 20a and extends linearly forward from a predetermined position in the vehicle. A front end of the inclined portion 20b is joined to the bumper cross member. The straight portion 20a and inclined portion 20b of the inner member 22 are configured as in the outer member 21.

As shown in Figures 1 and 3, the dash cross member 25 is a highly rigid member formed of a metal material and is joined, for example, to a lower part of the dash panel 10. The dash cross member 25 of the present embodiment includes a central member 26 and an outer member 27 arranged on opposite sides of the central member 26 in the vehicle width direction.

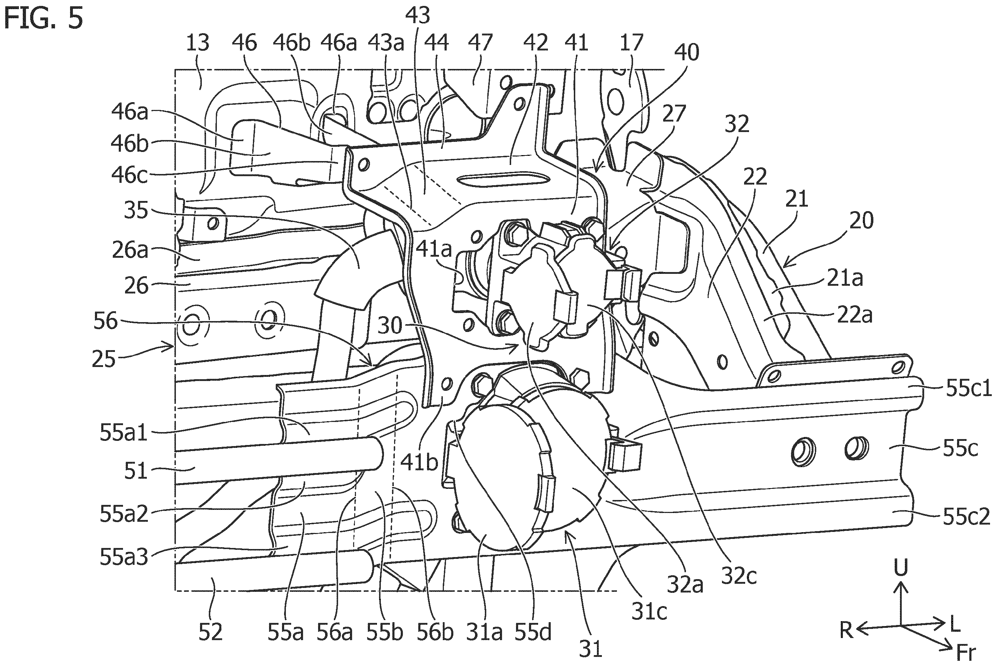

As shown in Figure 5, the central member 26 has a U-shaped cross section extending in the vehicle width direction and opening rearward in the vehicle. A flange 26a is provided on upper and lower portions of the central member 26, and the flange 26a is joined to a lower portion of the front wall part 13 of the dash panel 10 by spotwelding.

The outer member 27 is joined to an outer portion of the central member 26 and extends curving from an outer portion of the outer member 27 to the rear of the vehicle as it is more outward in the vehicle width direction, to correspond to the outer wall part 14 of the dash panel 10. The outer member 27 has a U-shaped cross section that opens rearward in the vehicle in the same manner as the central member 26. A flange 27a is provided on upper and lower portions of the outer member 27, and the flange 27a is joined to a lower portion of the outer wall part of the dash panel 10 by spotwelding.

Next, the bumper cross members 50 and 60 will be described. The bumper cross members 50 and 60 are members extending in the vehicle width direction to connect front portions of the vehicle body frame on the opposite sides in the vehicle width direction. As shown in Figure 1, the bumper cross members 50 and 60 of the present embodiment include an upper bumper cross member 50 (upper member) and a lower bumper cross member 60 (lower member). The upper bumper cross member 50 is joined to a front portion of the dash side member 20, and the lower bumper cross member 60 is joined to a front portion of a front side member 66, described later.

The upper bumper cross member 50 and the lower bumper cross member 60 are highly rigid members formed of a metal material and maintain vehicle body rigidity. The upper bumper cross member 50 and the lower bumper cross member 60 are arranged in the vehicle front part and have predetermined rigidity and strength against an impact load of a front collision or the like.

As shown in Figure 1, the upper bumper cross member 50 includes an upper bar 51, a lower bar 52, a left panel 55, and a right panel 53. Furthermore, the upper bumper cross member 50 includes a right bend portion 54 and a left bend portion 56. The upper bar 51 and the lower bar 52 extend in the vehicle width direction and are spaced from each other in the vehicle up-down direction. Furthermore, the upper bar 51 and the lower bar 52 are spaced at an approximately equal interval along the vehicle width direction. Respective right ends of the upper bar 51 and the lower bar 52 of the upper bumper cross member 50 in the vehicle width direction are arranged on an outer side in the vehicle width direction than an outer end of a front end of the right dash side member 20 in the vehicle width direction. Left ends of the upper bar 51 and the lower bar 52 are arranged between the left dash side member 20 and the right dash side member in the vehicle width direction and on a left side of the center of the vehicle in the width direction.

As shown in Figure 1, the right panel 53 is a panel extending in the vehicle width direction, the upper bar 51 is joined to an upper portion of the right panel 53, for example, by arc welding, and the lower bar 52 is joined to a lower portion of the right panel 53. A right end of the right panel 53 corresponds to the right ends of the upper bar 51 and the lower bar 52. A left end of the right panel 53 is placed on the right side of the left ends of the upper bar 51 and the lower bar and on the right side of the center of the vehicle in the width direction. The front end of the dash side member 20 is joined to an outer portion of the right panel 53 in the vehicle width direction and on the left side of the right bend portion 54 described later.

As shown in FIG. 1, the right bend portion 54 is configured by bending the upper bar 51, the lower bar 52, and the right panel 53. The upper bar 51, lower bar 52 and right panel 53 of the present embodiment extend in the vehicle width direction from the right end toward the left, bend, at a first predetermined position 54a, to incline forward in the vehicle as it is more in the vehicle width direction, extend along the inclination, and bend again in the vehicle width direction at a second predetermined position 54b located on the left side of the first predetermined position 54a, to extend in the vehicle width direction toward the left end.

As shown in Figures 1 and 5, the left panel 55 is a panel extending in the vehicle width direction and is spaced on the left side of the right panel 53 in the vehicle width direction. A right portion of the upper bar 51 is joined to an upper portion of the left panel 55 on the right side by arc welding, and a right portion of the lower bar 52 is joined to a lower portion of the left panel 55 on the right side.

The left bend portion 56 is provided in the left panel 55 and bends at a third predetermined position 56a and a fourth predetermined position 56b of the left panel 55 in the vehicle width direction. The left panel 55 includes a front wall 55a facing forward of the vehicle, an inclined wall 55b inclining rearward in the vehicle as it is further from a left end of the front wall 55a in the vehicle width direction (third predetermined position 56a) toward the left in the vehicle width direction, and a rear wall 55c extending in the vehicle width direction from a left end of the inclined wall 55b in the vehicle width direction (fourth predetermined position 56b). The left bend portion 56 is configured by bending as described above. The upper bar 51 and the lower bar 52 are joined to the front surface of the front wall 55a, and a front end of the left dash side member 20 is joined to an outer portion in the vehicle width direction in the rear surface of the rear wall 55c.

Furthermore, a first charging unit 31, described later, is attached to the rear wall 55c. In addition, the bracket 40 is joined to an upper portion of the rear wall 55c, and a second charging unit 32, described later, is attached to the bracket 40. The first charging unit 31 and the second charging unit 32 will be described later.

As described above, the left panel 55 and the right panel 53 of the upper bumper cross member 50 are joined to front portions of left and right dash side members 20, to ensure the rigidity of the vehicle front part.

Next, the lower bumper cross member 60 will be described. As shown in Figure 1, the lower bumper cross member 60 includes an upper bar 61, a lower bar 62, a left panel 64, and a right panel 63, similarly to the upper bumper cross member 50. The upper bar 61 and lower bar 62 of the lower bumper cross member 60 extend in the vehicle width direction and are spaced from each other in the vehicle up-down direction. Furthermore, the upper bar 61 and the lower bar 62 are spaced at an approximately equal interval along the vehicle width direction.

The right panel 63 of the lower bumper cross member 60 is a panel extending in the vehicle width direction. The upper bar 61 is joined to an upper portion of the right panel 63 by arc welding, and the lower bar 62 is joined to a lower portion of the right panel 63. The front portion of the front side member 66 on the right side is joined to the rear surface of the right panel 63.

The left panel 64 of the lower bumper cross member 60 is a substantially square panel. The upper bar 61 is joined to an upper portion of the left panel 64 by arc welding in the same way as the right panel 63, and the lower bar 62 is joined to a lower portion of the left panel 64. Furthermore, the front portion of the front side member 66 on the left side is joined to the rear surface of the left panel 64.

Here, the front side member 66 will be described. The front side member 66 is a highly rigid member constituting the vehicle body and is formed of a metal material. Furthermore, as shown in Figures 1 and 4, the front side member 66 is disposed below the dash side member 20 and extends in the vehicle front-rear direction. The front side members 66 are located on opposite sides of the lower part of the vehicle body in the vehicle width direction and support the lower part of the dash panel, for example. A front end of the front side member 66 is placed forward of the front end of the dash side member 20 in the vehicle front-rear direction. The lower bumper cross member 60 is joined to the front end of the front side member 66, to ensure the rigidity of the vehicle front part.

Next, the connector receiver 30 will be described. The connector receiver 30 is disposed in the front compartment 1 and includes the first charging unit 31, the second charging unit 32, and a harness 35 connected to these units.

The first charging unit 31 is disposed along the front surface of an upper member. Specifically, the first charging unit 31 is attached to the rear wall 55c of the left panel 55 of the upper bumper cross member 50. The rear wall 55c is provided with a first attaching hole 55d to which the first charging unit 31 is attached.

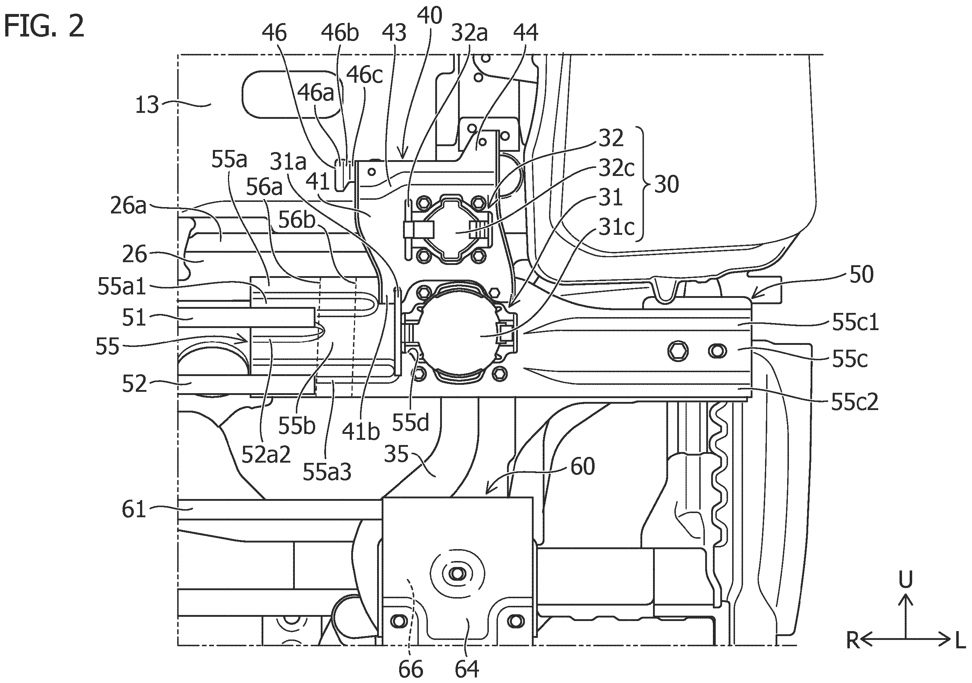

The first charging unit 31 has, for example, a substantially cylindrical shape extending in the vehicle front-rear direction and is disposed through the first attaching hole 55d. A flange (not shown) protruding radially outward is provided on a side portion of the first charging unit 31, and the flange may be fastened to the rear wall 55c with a fastening member or the like. A front end of the first charging unit 31 is placed forward of the rear wall 55c, and a charging port 31c (Figure 2) configured to be openable and closable with a lid 31a is formed at the front end of the first charging unit 31. With the lid 31a open, a charging connector of a charging device external to the vehicle is configured to be connectable to the charging port 31c of the first charging unit 31.

By disposing the charging port 31c of the first charging unit 31 forward in the vehicle and along the upper bumper cross member 50, the upper bumper cross member 50 can receive an insertion load when the charging connector is inserted into the first charging unit 31. The upper bumper cross member 50 is a member having predetermined rigidity and strength against the impact load of front collision or the like as described above, so that by disposing the first charging unit 31 along the front surface of the left panel 55 of the upper bumper cross member 50, it is possible to stably support the first charging unit 31 against loads in an up-down direction, left-right direction and front-rear direction generated when the charging connector is inserted.

For example, when an operator performing the charging manually inserts the charging connector into the charging port 31c of the first charging unit 31, the charging connector is not necessarily attached or detached in a first direction that is horizontal along the vehicle front-rear direction and orthogonal to the vehicle width direction and may deviate in a predetermined direction relative to the first direction. When the charging connector is inserted at a predetermined angle to the first direction, part of the insertion load acts in a direction in which the predetermined angle is formed. Furthermore, a load acts downward to the charging port 31c that serves as a connection point between the first charging unit 31 and the charging connector. In addition, when the posture of the operator changes due to a shift in the center of gravity of the operator or the like, a load acts in a predetermined direction on the charging port 31c.

Thus, even if a load acts in various directions to the charging port 31c, the first charging unit 31, which is disposed along the highly rigid upper bumper cross member 50, can receive the load. As a result, damage to the first charging unit 31 can be reduced. In addition, reducing the damage to the first charging unit 31 improves safety during a charging operation that involves high voltage.

Furthermore, in the present embodiment, as shown in Figures 1 and 2, the connector receiver 30 includes two charging units, that is, the first charging unit 31 and the second charging unit 32. In this example, the first charging unit 31 is disposed along the front surface of the upper bumper cross member 50, and the second charging unit 32 is provided on the bracket 40 joined to the upper bumper cross member 50. In addition, the first charging unit 31 and the second charging unit 32 are arranged so that positions of the charging units in the vehicle front-rear direction are aligned, and positions of the charging units in the vehicle up-down direction are different from each other.

Here, the bracket 40 will be described. As shown in Figure 5, the bracket 40 includes a vertical wall part 41 extending upward from the upper bumper cross member 50, and an extension 42 extending from an upper portion of the vertical wall part 41 to the rear of the vehicle and joined to the dash panel 10. A lower end of the vertical wall part 41 is placed to extend in the vehicle width direction and to cover an upper portion of the first charging unit 31 from above.

The vertical wall part 41 of the bracket 40 is a plate-shaped part facing forward of the vehicle and is joined to the upper portion of the rear wall 55c of the left panel 55 of the upper bumper cross member 50. In this example, a flange 41b protruding downward is provided on each side portion in the vehicle width direction at the lower end of the vertical wall part 41, and the flange 41b and the upper portion of the rear wall 55c of the left panel 55 are fastened with fastening members such as bolts. The lower end of the vertical wall part 41 is placed to cover the upper portion of the first charging unit 31. Furthermore, a second attaching hole 41a to which the second charging unit 32 is attached is provided in the vertical wall part 41 (Figure 5). The attaching of the second charging unit 32 will be described later.

The extension 42 of the bracket 40 is a portion extending from an upper end of the vertical wall part 41 toward the rear of the vehicle, to cover the second charging unit 32 from above. At the rear end of the extension 42, a rear flange 44 protruding upward is provided. Right and left portions in the rear flange 44 are joined to the front wall part 13 of the dash panel 10 via a right support member 46 and a left support member 47. A right portion of the rear flange 44 is fastened to the right support member 46 with a fastening member such as a bolt. Similarly, the left portion of the rear flange 44 and the left support member 47 are fastened with a fastening member such as a bolt. Such joining may be spotwelding.

As shown in Figure 5, a stepped portion 43 is provided on the extension 42. A ridge line 43a of the stepped portion 43 is formed to extend in the vehicle front-rear direction between the upper portion of the vertical wall part 41 and the rear flange 44. The extension 42 on the left side is disposed above the extension 42 on the right side.

As shown in Figure 5, the right support member 46 includes two rear joining portions 46a joined by spotwelding to the front wall part 13 of the dash panel 10, side wall portions 46b extending forward in the vehicle from the respective joining portions, and a front joining portion 46c connecting the side wall portions 46b on the opposite sides. The front joining portion 46c is fastened to the right portion of the rear flange 44 of the bracket 40 with a bolt. Although not illustrated in the drawings, a rear portion of the left support member 47 is joined to the front wall part 13 of the dash panel 10 in the same manner as the right support member 46, and a front portion of the left support member 47 is fastened to the left portion of the rear flange 44 of the bracket 40 with a bolt. Since the bracket 40 is joined to the dash panel 10 in this manner, the support rigidity of the bracket 40 can be improved.

As described above, the second charging unit 32 is attached to the vertical wall part 41. The second charging unit 32 has, for example, a substantially cylindrical shape extending in the vehicle front-rear direction and is disposed through the second attaching hole 41a. A flange (not shown) protruding radially outward is provided on a side portion of the second charging unit 32, and the flange may be fastened to the vertical wall part 41 with a fastening member or the like. A front end of the second charging unit 32 is placed forward of the vertical wall part 41, and a charging port 32c (Figure 2) configured to be openable and closable with a lid 32a is formed at the front end of the second charging unit 32. With the lid 32a open, the charging connector of the charging device external to the vehicle is configured to be connectable to the charging port 32c of the second charging unit 32.

By attaching the second charging unit 32 to the bracket 40 and disposing the charging port 31c of the first charging unit 31 along the front surface of the upper bumper cross member 50, the insertion load of the charging connector during the charging operation can be effectively transmitted to the upper bumper cross member 50. Furthermore, the first charging unit 31 and the second charging unit 32 are different in position (height) in the vehicle up-down direction, and the operator can therefore easily understand into which charging unit the charging connector is inserted.

For example, one of the first charging unit 31 and the second charging unit 32 can perform normal charging and the other can perform quick charging. **In** this case, the charging ports 31c and 32c may be different in diameter. As shown in Figure 2, in a structure in which the first charging unit 31 and the second charging unit 32 are arranged in an up-down direction, the operator consciously performs alignment, and the operator can be therefore inhibited from inserting into the wrong one of the charging ports 31c or 32c. As a result, it is possible to reduce the occurrence of failures in the first charging unit 31 and the second charging unit 32.

Furthermore, in the present embodiment, as shown in Figure 3, a tunnel part 4 that bulges upward in the vehicle is provided in an intermediate portion, in the vehicle width direction, of a floor part located behind the dash panel 10 in the vehicle.

**In** addition, a master cylinder 70 constituting a brake system is disposed behind the dash panel 10 in the vehicle and forward of a driver seat (not shown).

Furthermore, the first charging unit 31 and the second charging unit 32 of the connector receiver 30 are arranged to be shifted from the tunnel part 4 in the vehicle width direction toward a side on which a front passenger seat is located. **In** the present embodiment, the driver seat is disposed on the right side, and the first charging unit 31 and the second charging unit 32 are therefore arranged to be shifted from the tunnel part 4 toward the left side.

As described above, the connector receiver 30 includes the first charging unit 31 including the charging port 31c and the lid 31a, the second charging unit 32 including the charging port 32c and the lid 32a, and the harness 35. The harness 35 electrically and mechanically connects the first charging unit 31 and the second charging unit 32 to the battery pack disposed behind the dash panel 10 and below the floor panel 3. That is, the connector receiver 30 has a predetermined length in the vehicle front-rear direction.

Furthermore, when subjected to the impact load of front collision or the like, the dash panel 10 needs to be inhibited from moving toward the inside of the vehicle and the rear of the vehicle. **In** addition, the connector receiver 30 has the length in the vehicle front-rear direction, so that when the connector receiver 30 retracts due to the front collision or the like, the dash panel 10 may retract as the connector receiver 30 retracts.

**In** the present embodiment, since the first charging unit 31 and the second charging unit 32 are arranged on a side on which the front passenger seat is located relative to the tunnel part 4, the first charging unit 31 and the second charging unit 32 are arranged to be shifted in the vehicle width direction from the master cylinder 70 that is one of the components of the brake system. Therefore, when subjected to the impact load of the front collision or the like and even if the dash panel 10 retracts as the connector receiver 30 retracts, the master cylinder 70 can be inhibited from being retracted.

**In** the present embodiment, the front side member 66 is disposed below the dash side member 20, and the front ends of the first charging unit 31 and the second charging unit 32, that is, the charging ports 31c and 32c formed at the front ends of the charging units are arranged in the vehicle front-rear direction behind the front end of the front side member 66 in the vehicle. Furthermore, as described above, the bumper cross member of the present embodiment includes the upper bumper cross member 50 and the lower bumper cross member 60, and an outer portion of the upper bumper cross member 50 in the vehicle width direction is joined to the dash side member 20, while an outer portion of the lower bumper cross member 60 in the vehicle width direction is joined to the front side member 66. Additionally, the first charging unit 31 and the second charging unit 32 are arranged along the front surface of the upper bumper cross member 50.

The front side member 66 has high rigidity against a load acting in the vehicle front-rear direction. Therefore, since the lower bumper cross member 60 is joined as described above, the rigidity of the vehicle front part can be ensured. Furthermore, when an impact load acts from the front of the electric vehicle to the front part of the electric vehicle, the first charging unit 31 and the second charging unit 32 are arranged as described above, so that, for example, a colliding object can be received at the front side member 66 before the first charging unit 31 and the second charging unit 32. As a result, the first charging unit 31 and the second charging unit 32 can be inhibited from first hitting the colliding object. This makes it possible to inhibit the impact load from directly acting on the first charging unit 31 and the second charging unit 32, and to inhibit the first charging unit 31 and the second charging unit 32 from being damaged by the impact load.

Furthermore, since the front side member 66 is disposed below the first charging unit 31 and the second charging unit 32, the colliding object first collides with the front end of the front side member 66, and then the colliding object can be inhibited from diving into the lower part of the vehicle.

**In** the present embodiment, the left bend portion 56 and the right bend portion 54 are provided at an intermediate portion of the upper bumper cross member 50 in the vehicle width direction so that an outer end of the upper bumper cross member is located behind the center of the upper bumper cross member in the vehicle width direction, and the first charging unit 31 is disposed outside the left bend portion 56 in the vehicle width direction.

As shown in Figure 5, by providing the bend portion (left bend portion 56) in the upper bumper cross member 50, the front end of the first charging unit 31 can be placed behind a front end of the upper bumper cross member 50 in the vehicle as shown in Figure 4, so that the charging unit can be effectively protected. Furthermore, even if the colliding object collides with the upper bumper cross member 50 due to a front collision or the like, the first charging unit 31 is disposed behind the front end of the upper bumper cross member 50 in the vehicle, and the colliding object can be inhibited from directly colliding with the first charging unit 31. It is therefore possible to protect the first charging unit 31 from the impact load of a front collision or the like.

Furthermore, as shown in Figure 5, a plurality of beads extending in the vehicle width direction are provided in the left panel 55 of the upper bumper cross member 50 of the present embodiment. In this example, the plurality of beads include an upper inner bead 55a1, an intermediate inner bead 55a2, a lower inner bead 55a3, an upper outer bead 55c1, and a lower outer bead 55c2.

The upper inner bead 55a1, the intermediate inner bead 55a2, and the lower inner bead 55a3 are arranged on the right side of the first charging unit 31 and are spaced from each other in the vehicle up-down direction. A right end of the upper inner bead 55a1 is placed at a right end of the left panel 55, and the right end of the upper inner bead 55a1 is placed at the left end of the inclined wall 55b of the left panel 55 (fourth predetermined position 56b). A right end of the intermediate inner bead 55a2 is placed at the right end of the left panel 55, and the right end of the intermediate inner bead 55a2 is placed at the right end of the inclined wall 55b of the left panel 55 (third predetermined position 56a). A right end of the lower inner bead 55a3 is placed at the right end of the left panel 55, and the right end of the lower inner bead 55a3 is placed on the left side of the left end of the inclined wall 55b of the left panel 55 (fourth predetermined position 56b) and on the right side of the first charging unit 31. Furthermore, a left portion of the upper bar 51 is joined between the upper inner bead 55a1 and the intermediate inner bead 55a2. By providing the upper inner bead 55a1, the intermediate inner bead 55a2, and the lower inner bead 55a3, it is possible to ensure the rigidity in the vehicle width direction in the left bend portion 56.

The upper outer bead 55c1 and the lower outer bead 55c2 are spaced from each other in the vehicle up-down direction on the left side of the first charging unit. The upper outer bead 55c1 is provided at an upper end of the left panel 55 and extends from a right portion of the first charging unit 31 to a left end of the left panel 55. The lower outer bead is provided at a lower end of the left panel 55 and extends from the right portion of the first charging unit 31 to the left end of the left panel 55. The front end of the left dash side member 20 is joined between the upper outer bead 55c1 and the lower outer bead 55c2. By providing the upper outer bead 55c1 and the lower outer bead 55c2, it is possible to effectively reinforce a region to which the dash side member 20 is joined.

**In** the present embodiment, the front ends of the first charging unit 31 and the second charging unit 32 are placed in the vehicle front-rear direction between the outer end of the upper bumper cross member 50 in the vehicle width direction and the center of the upper bumper cross member 50 in the vehicle width direction. That is, by providing the left bend portion 56, the front ends of the first charging unit 31 and the second charging unit 32 are placed as described above. This makes it easier to protect the front ends of the first charging unit 31 and the second charging unit 32. Furthermore, by heightening the rigidity of the left bend portion 56 with the upper inner bead 55a1, the intermediate inner bead 55a2, and the lower inner bead 55a3, it is possible to stably place the front end of the first charging unit 31 behind the front end of the upper bumper cross member 50.

The description of the present embodiment is an example for describing the present invention, and it is not intended to limit the invention as claimed in the claims. Additionally, the configuration of each unit is not limited to the above embodiment, and various modifications can be made within the technical scope of the claims.

For example, in the present embodiment, the first charging unit 31 is attached to the upper bumper cross member 50, and the second charging unit 32 is attached to the bracket 40, but the invention is not limited thereto. For example, a vertical length of the left panel 55 of the upper bumper cross member 50 may be set to be long, and the first charging unit 31 and the second charging unit 32 may be attached to the left panel 55. In this case, a reinforcement or the like that connects the left panel 55 and the dash panel 10 may be provided.

In the present embodiment, the vehicle body frame extending in the vehicle front-rear direction comprises the dash side member 20 but is not limited to this member. For example, the vehicle body frame may comprise the front side member 66.

### [Reference Signs List]

- 1: Front compartment
- 2: Passenger compartment
- 3: Floor panel
- 4: Tunnel part
- 10: Dash panel
- 11: Upper surface part
- 12: Rear wall part
- 13: Front wall part
- 14: Outer wall part
- 15: Outer vertical wall part
- 17: Dash side panel
- 20: Dash side member
- 20a: Straight portion
- 20b: Inclined portion
- 21: Outer member
- 21a: Flange
- 22: Inner member
- 22a: Flange
- 25: Dash cross member
- 26: Central member
- 26a: Flange
- 27: Outer member
- 27a: Flange
- 30: Connector receiver
- 31: First charging unit
- 31a: Lid
- 31c: Charging port
- 32: Second charging unit
- 32a: Lid
- 32c: Charging port
- 35: Harness
- 40: Bracket
- 41: Vertical wall part
- 41a: Second attaching hole
- 41b: Flange
- 42: Extension
- 43: Stepped portion
- 43a: Ridge line
- 44: Rear flange
- 46: Right support member
- 46a: Rear joining portion
- 46b: Side wall portion
- 46c: Front joining portion
- 47: Left support member
- 50: Upper bumper cross member (upper member)
- 51: Upper bar
- 52: Lower bar
- 53: Right panel
- 54: Right bend portion
- 54a: First predetermined position
- 54b: Second predetermined position
- 55: Left panel
- 55a: Front wall
- 55a1: Upper inner bead
- 55a2: Intermediate inner bead
- 55a3: Lower inner bead
- 55b: Inclined wall
- 55c: Rear wall
- 55c1: Upper outer bead
- 55c2: Lower outer bead
- 55d: First attaching hole
- 56: Left bend portion
- 56a: Third predetermined position
- 56b: Fourth predetermined position
- 60: Lower bumper cross member (lower member)
- 61: Upper bar
- 62: Lower bar
- 63: Right panel
- 64: Left panel
- 66: Front side member
- 70: Master cylinder

## Claims

1. A front structure of an electric vehicle, comprising:
a vehicle body frame arranged on opposite sides, in a vehicle width direction, of a front compartment disposed in a vehicle front part, and extending in a vehicle front-rear direction;
a bumper cross member extending in the vehicle width direction to connect front portions of the vehicle body frame on the opposite sides in the vehicle width direction; and
a connector receiver including a charging unit to which a charging connector of a charging device external to the vehicle is connected and which faces forward of the vehicle,
**characterized in that** the charging unit is disposed along a front surface of the bumper cross member.

2. The front structure of the electric vehicle according to claim 1, wherein
a dash panel extending in the vehicle width direction is disposed in a rear part of the front compartment, and a tunnel part that bulges upward in the vehicle is provided in an intermediate portion, in the vehicle width direction, of a floor part located behind the dash panel in the vehicle, and
the charging unit is disposed on a side on which a front passenger seat is located relative to the tunnel part in the vehicle width direction.

3. The front structure of the electric vehicle according to claim 1 or 2, wherein
the vehicle body frame includes: a dash side member arranged on opposite sides in the vehicle width direction, and extending in the vehicle front-rear direction; and a front side member disposed below the dash side member in the vehicle, and extending in the vehicle front-rear direction,
the charging unit is disposed along a front surface of the dash side member, and
a front end of the charging unit is placed behind a front end of the front side member in the vehicle.

4. The front structure of the electric vehicle according to claim 3, wherein
the bumper cross member includes: an upper member extending in the vehicle width direction; and a lower member spaced below the upper member, and extending in the vehicle width direction,
an outer portion of the upper member in the vehicle width direction is joined to the vehicle body frame, and an outer portion of the lower member in the vehicle width direction is joined to the front side member, and
the charging unit is disposed along a front surface of the upper member.

5. The front structure of the electric vehicle according to claim 1 or 2, wherein
the bumper cross member is provided with a bend portion so that an outer portion of the bumper cross member in the vehicle width direction is located behind a center in the vehicle width direction, and
the charging unit is disposed outside the bend portion in the vehicle width direction.

6. The front structure of the electric vehicle according to claim 4, wherein a front end of the charging unit in the vehicle front-rear direction is placed between an outer end of the bumper cross member in the vehicle width direction and the center in the vehicle width direction.

7. The front structure of the electric vehicle according to claim 1 or 2, wherein
the charging unit includes a first charging unit and a second charging unit,
the first charging unit is disposed along the front surface of the bumper cross member, and the second charging unit is provided in a bracket joined to the bumper cross member,
the first charging unit and the second charging unit are arranged so that positions of the charging units in the vehicle front-rear direction are aligned, and positions in a vehicle up-down direction are different from each other.

8. The front structure of the electric vehicle according to claim 7, wherein
a dash panel extending in the vehicle width direction is disposed in a rear part of the front compartment,
the bracket includes a vertical wall part extending upward from the bumper cross member, and an extension extending rearward in the vehicle from an upper portion of the vertical wall part, and joined to the dash panel, and
a lower end of the vertical wall part extends in the vehicle width direction and is placed to cover an upper portion of the first charging unit from above.
